(19)

Europäisches
Patentamt
European
Patent Office
Office européen
des brevets

(11) **EP 4 546 160 A1**

(12) **EUROPEAN PATENT APPLICATION**

(43) Date of publication:
**30.04.2025 Bulletin 2025/18**

(21) Application number: **24210146.7**

(22) Date of filing: **31.10.2024**

(51) International Patent Classification (IPC):
***G06F 16/332*** (2025.01)     ***G06F 16/3332*** (2025.01)
***G06F 16/3329*** (2025.01)

(52) Cooperative Patent Classification (CPC):
**G06N 5/01; G06F 16/3322; G06F 16/3329;**
**G06F 16/3338**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.04.2024 CN 202410468539**

(71) Applicant: **Beijing Baidu Netcom**
**Science Technology Co., Ltd.**
**Beijing 100085 (CN)**

(72) Inventors:
• **LI, Xiao**
  **Beijing, 100085 (CN)**
• **JIA, Xin**
  **Beijing, 100085 (CN)**
• **GU, Simiu**
  **Beijing, 100085 (CN)**
• **WANG, Junfeng**
  **Beijing, 100085 (CN)**
• **SHI, Haibo**
  **Beijing, 100085 (CN)**

• **LU, Yu**
  **Beijing, 100085 (CN)**
• **XU, Sheng**
  **Beijing, 100085 (CN)**
• **ZHANG, Liang**
  **Beijing, 100085 (CN)**
• **ZHOU, Wenjie**
  **Beijing, 100085 (CN)**
• **LIU, Yijun**
  **Beijing, 100085 (CN)**
• **LU, Mei**
  **Beijing, 100085 (CN)**
• **WU, Zichen**
  **Beijing, 100085 (CN)**
• **YANG, Min**
  **Beijing, 100085 (CN)**
• **WANG, Huanjie**
  **Beijing, 100085 (CN)**
• **TANG, Qiao**
  **Beijing, 100085 (CN)**
• **CUI, Mengmeng**
  **Beijing, 100085 (CN)**

(74) Representative: **Nederlandsch Octrooibureau**
**P.O. Box 29720**
**2502 LS The Hague (NL)**

(54) **METHOD AND APPARATUS OF DETERMINING INTERACTION INFORMATION, ELECTRONIC DEVICE AND STORAGE MEDIUM**

(57)     The present disclosure provides a method and an apparatus of determining interaction information, an electronic device and a storage medium, which relates to a field of artificial intelligence technology, in particular to a large model, a generative model, an NLP, an intelligent search and other fields. The specific implementation plan is to determine a plurality of questioning dimensions according to query information of a subject and historical query information, where each questioning dimension includes a dimension name and a plurality of options; determine a target questioning dimension from the plurality of questioning dimensions according to evaluation values of the plurality of questioning dimensions and whether semantic information of the plurality of questioning dimensions are consistent with semantic information of a query result associated with the query information; and determine the interaction information according to the dimension name and the plurality of options in the target questioning dimension.

200

| A plurality of questioning dimensions are determined according to query information of a subject and historical query information, where each questioning dimension includes a dimension name and a plurality of options | S210 |

| A target questioning dimension is determined from the plurality of questioning dimensions according to evaluation values of the plurality of questioning dimensions and whether semantic information of the plurality of questioning dimensions are consistent with semantic information of a query result associated with the query information | S220 |

| Interaction information is determined according to the dimension name and the plurality of options in the target questioning dimension | S230 |

FIG. 2

EP 4 546 160 A1

**Description**

TECHNICAL FIELD

The present disclosure relates to a field of artificial intelligence technology, in particular to a large model, a generative model, an NLP, an intelligent search and other fields. More specifically, the present disclosure provides a method and an apparatus of determining interaction information, an electronic device, a storage medium and a computer program product.

BACKGROUND

In complex search scenes, the diversity and ambiguity of user expressions may cause search engines to be unable to accurately capture real search intentions, resulting in deviations between search results and users' actual needs.

SUMMARY

The present disclosure provides a method and an apparatus of determining interaction information, an electronic device, a storage medium and a computer program product.

According to an aspect of the present disclosure, a method of determining interaction information is provided, and the method includes: determining a plurality of questioning dimensions according to query information of a subject and historical query information, where each questioning dimension includes a dimension name and a plurality of options; determining a target questioning dimension from the plurality of questioning dimensions according to evaluation values of the plurality of questioning dimensions and whether semantic information of the plurality of questioning dimensions are consistent with semantic information of a query result associated with the query information; and determining the interaction information according to the dimension name and the plurality of options in the target questioning dimension.

According to another aspect of the present disclosure, an apparatus of determining interaction information is provided, and the apparatus includes: a first determination module, a second determination module and a third determination module. The first determination module is configured to determine a plurality of questioning dimensions according to query information of a subject and historical query information, where each questioning dimension includes a dimension name and a plurality of options. The second determination module is configured to determine a target questioning dimension from the plurality of questioning dimensions according to evaluation values of the plurality of questioning dimensions and whether semantic information of the plurality of questioning dimensions are consistent with semantic information of a query result associated with the query information. The third determination module is configured to determine the interaction information according to the dimension name and the plurality of options in the target questioning dimension.

According to another aspect of the present disclosure, an electronic device is provided, and the electronic device includes: at least one processor; and a memory communicatively coupled with the at least one processor, where the memory stores instructions executable by the at least one processor, and the instructions, when executed by the at least one processor, cause the at least one processor to implement the methods provided by the present disclosure.

According to another aspect of the present disclosure, a non-transitory computer readable storage medium storing computer instructions is provided, and the computer instructions are configured to cause a computer to implement the methods provided by the present disclosure.

According to another aspect of the present disclosure, a computer program product is provided, including a computer program, where the computer program, when executed by a processor, is configured to implement the methods provided by the present disclosure.

It should be understood that the content described in this part is not intended to identify the key or important features of embodiments of the present disclosure, nor is it intended to limit the scope of the present disclosure. Other features of the present disclosure will be easily understood through the following specification.

BRIEF DESCRIPTION OF THE DRAWINGS

The accompanying drawings are used for better understanding of the solution and do not constitute a limitation to the present disclosure, in which:

FIG. 1 is a schematic diagram of an application scene for a method and an apparatus of determining interaction information according to embodiments of the present disclosure;

FIG. 2 is a schematic flowchart of a method of determining interaction information according to embodiments of the present disclosure;

FIG. 3A is a schematic diagram of a principle of a method of determining interaction information according to embodiments of the present disclosure;

FIG. 3B is a schematic diagram of an interaction page according to embodiments of the present disclosure;

FIG. 4 is a schematic block diagram of a structure of an apparatus of determining interaction information according to embodiments of the present disclosure; and

FIG. 5 is a block diagram of a structure of an electronic device for implementing a method of determining interaction information according to embodiments of the present disclosure

## DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skill in the art should realize that various changes and modifications may be made to embodiments described herein without departing from the scope and spirit of the present disclosure. Likewise, for clarity and conciseness, descriptions of well-known functions and structures are omitted in the following description.

In the technical solution of the present disclosure, collecting, storing, using, processing, transmitting, providing, and disclosing etc. of data (such as but not limited to user personal information) involved in the present disclosure comply with relevant laws and regulations, and do not violate public order and good customs.

In the technical solution of the present disclosure, the owner's authorization or consent is acquired before related data is acquired or collected.

In complex search scenes, the diversity and ambiguity of user expressions may cause search engines to be unable to accurately capture real search intentions, resulting in deviations between search results and users' actual needs.

For example, query information "Chinese medicine for body conditioning" is a relatively complex and vague requirement, and the query information involves personalized preferences of users. However, search engines will return broad search results related to keywords such as Chinese medicine and body conditioning, which contain many contents that do not meet the users' requirements and may not effectively meet personalized requirements of the users. Some search engines may recommend other possible query information to the users through related searches, but this method is still difficult to discover the users' real requirements, and it is easy to mix contents unrelated to the users' requirements.

Embodiments of the present disclosure provide a method of determining interaction information. The method may generate questioning dimensions for query information through a thought chain method, combining prior expert knowledge of a large model and posterior supplements in users' historical query information. By asking users questions, the users are guided to provide more detailed information about a query target, thereby exploring the users' query requirements. In this way, the search engines may provide query results that match the users' requirements, improve the accuracy and relevance of the query results, and provide the users with a more personalized and satisfactory search experience. In addition, since the users may actively participate in the query process rather than passively accepting contents recommended by the search engines, it may increase the users' initiative and participation, thereby improving user experience.

Technical solution provided by the present disclosure will be elaborated in detail with reference to the accompanying drawings and specific embodiments.

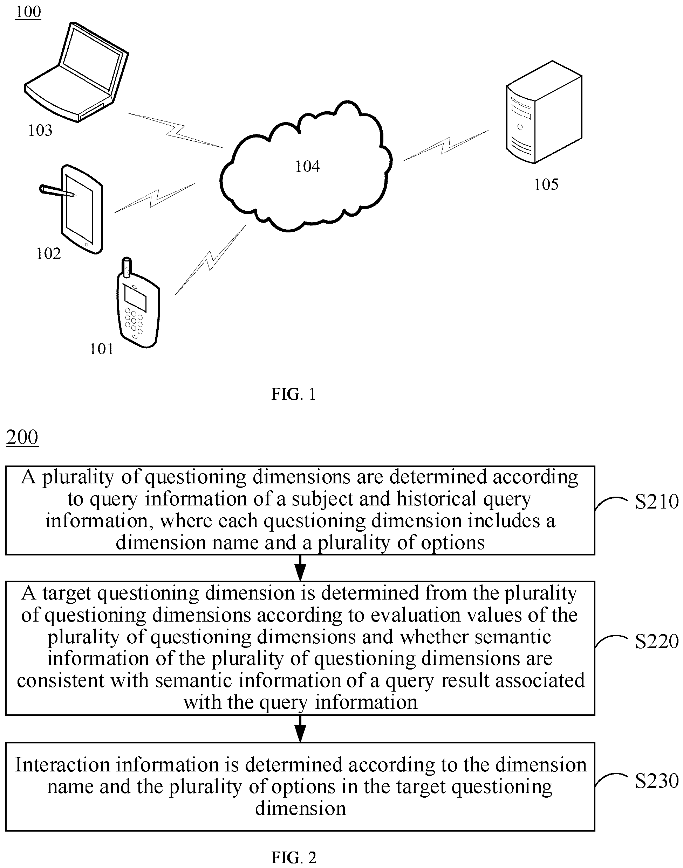

FIG. 1 is a schematic diagram of an application scene for a method and an apparatus of determining interaction information according to embodiments of the present disclosure.

It should be noted that a system architecture shown in FIG. 1 is only an example of the system architecture that may be applied to the embodiments of the present disclosure, to help those skilled in the art understand the technical content of the present disclosure, but it does not mean that the embodiments of the present disclosure cannot be used in other devices, systems, environments or scenes.

As shown in FIG. 1, a system architecture 100 according to this embodiment may include terminal devices 101, 102, 103, a network 104 and a server 105. The network 104 is used as a medium for providing communication links between the terminal devices 101, 102, 103 and the server 105. The network 104 may include various connection types, such as a wired and/or wireless communication link, and so on.

Users may interact with the server 105 through the network 104 using the terminal devices 101, 102, 103 to receive or send messages, etc. The terminal devices 101, 102, 103 may be various electronic devices with display screens and supporting web browsing, including but not limited to smartphones, tablet computers, laptops, desktop computers, and the like.

The server 105 may be a server that provides various services, such as a background management server (for example only) that provides support for websites browsed by users using the terminal devices 101, 102, 103. The background management server may analyze and process received data such as user requests, and provide a feedback on processing results (such as interaction information generated according to query information input by the users) to the terminal devices.

It should be noted that the method of determining interaction information provided by embodiments of the present disclosure may generally be executed by the server 105. Accordingly, the apparatus of determining interaction information provided by embodiments of the present disclosure may generally be disposed in the server 105. The method of determining interaction information provided by embodiments of the present disclosure may also be executed by a server or a server cluster that is different from the server 105 and may communicate with the terminal devices 101, 102, 103 and/or the server 105. Accordingly, the apparatus of determining interaction information provided by embodiments of the present disclosure may also be disposed in a server or a server cluster that is different from the server 105 and may communicate with the terminal devices 101, 102, 103 and/or the server 105.

It should be understood that the number of terminal devices, networks and servers in FIG. 1 is only illustrative. Any number of terminal devices, networks and servers may be provided according to implementation requirements.

FIG. 2 is a schematic flowchart of a method of determining interaction information according to embodiments of the present disclosure.

As shown in FIG. 2, a method 200 of determining interaction information may include operation S210 to operation S230.

In operation S210, a plurality of questioning dimensions are determined according to query information of a subject and historical query information, where each questioning dimension includes a dimension name and a plurality of options.

For example, the subject may include a user who uses a search engine.

For example, the query information may be a content to be queried input by the user, and a data type of the query information may be text, for example, the query information is "recommendation for a good novel".

For example, the historical query information may include query information within a predetermined period of time in the past, and the predetermined period of time may be half a month. In some embodiments, some contents supplemented by the user may be used as the historical query information. For example, after inputting the query information in the search engine, the user does not exit the search engine and continues to input some other contents, or selects some query contents provided by a page in the search engine, which may be used as the historical query information.

For example, the dimension name may include "novel type", "novel length", etc., options associated with "novel type" may include "suspense reasoning", "science fiction", etc., and options associated with "novel length" may include "long-length", "medium-length", "short-length", etc.

For example, keywords may be extracted from the query information and the historical query information, and a mapping relationship between a keyword and a questioning dimension may be pre-configured, and then the questioning dimension may be determined based on the mapping relationship.

In operation S220, a target questioning dimension is determined from the plurality of questioning dimensions according to evaluation values of the plurality of questioning dimensions and whether semantic information of the plurality of questioning dimensions are consistent with semantic information of a query result associated with the query information.

For example, the query result may represent a content obtained by searching for the query information. A data type of the query result may include text, image, video, etc. For example, if the query result includes contents of: "recommended long-length novels include a first novel, recommended medium-length novels include a second novel, and recommended short stories include a third novel", the query content is semantically consistent with the "novel length" in the questioning dimension.

For example, the evaluation value may represent a degree of influence of the questioning dimension on the query content, and may also represent a degree of influence of the questioning dimension on understanding user query requirements. The evaluation value may be a specific numerical value or an evaluation parameter representing a degree of evaluation value. The evaluation values corresponding to the questioning dimensions may be pre-configured, or a large model may be used for evaluation.

For example, the questioning dimension that is semantically inconsistent with the query result and has a high evaluation value may be determined as a target questioning dimension.

In operation S230, interaction information is determined according to the dimension name and the plurality of options in the target questioning dimension.

For example, the dimension name and the plurality of options in the target questioning dimension may be used as interaction information. For another example, the dimension name in the target questioning dimension may be expressed in natural language. The dimension name "novel type" may be converted to "what type of novel do you want to read", and then the converted dimension information and options may be used as interaction information, so that the interaction information is easier to be understood by the user.

In the embodiments of the present disclosure, the user is guided to provide more detailed information about a query target by asking the user questions, thereby exploring the user's query requirements. In this way, the search engines may provide query results that match the user's requirements, improve the accuracy and relevance of the query results, and provide the user with a more personalized and satisfactory search experience. In addition, since the user may actively participate in the query process rather than passively accepting contents recommended by the search engines, it may increase the user's initiative and participation, thereby improving user experience.

In practical applications, there are various ways to apply interaction information after obtaining the interaction information. In an application scene, interaction information may be displayed through a front-end page, so that the user may perform a selection operation based on the questioning dimension, thereby supplementing the query content. In another application scene, interaction information may be used to build training samples, and other models may be trained using the training samples. In this way, in online applications, other trained models may be used to interact with users. It may be understood that resources required by other models may be less than those required by larger models, and other models may be SFT (Sparse Fine Tuning) models.

According to another embodiment of the present disclosure, historical query information may be selected first. The filtering process may include: determining candidate historical query information which meets a predetermined filtering condition as the historical query information, where the predetermined filtering condition may include at least one of: an intention of the candidate historical query information being consistent with an intention of the query information, a search frequency of the candidate historical query information meeting a predetermined frequency condition, and an entity contained in the candidate historical query information being consistent with an entity contained in the query information.

For example, the historical query information within a predetermined period of time in the past may be obtained first, and the historical query information may be used as the candidate historical query information.

Next, it may be determined whether the intention of the candidate historical query information is consistent with the intention of the query information. For example, whether the intentions are consistent may be determined through binary classification, such as determining whether the intentions are consistent by inputting the candidate historical query information and the query information into a pre-trained classification model. For another example, it is also possible to perform intent recognition on the candidate historical query information and the query information separately, and then determine whether the intentions of the two are consistent.

Next, a frequency of the candidate historical query information may be counted, and then the candidate historical query information may be filtered according to the predetermined frequency condition. It may be understood that frequency may reflect user preferences. The predetermined frequency condition may include: the frequency of the candidate historical query information being greater than a threshold, and the threshold being a numerical value such as 5. The predetermined frequency condition may also include: a frequency of the candidate historical query information being ranked in a top predetermined ranking, for example, the frequency being in the top 10.

Next, it may be determined whether the entity contained in the filtered candidate historical query information is consistent with the entity contained in the query information. The method of determining the entity may include named entity recognition, which is not limited in this embodiment.

For example, the query information and the candidate historical query information are "How to repair a broken first-brand phone" and "How to repair a broken second-brand phone" respectively. The intentions of the two are consistent, but the entities of the two are inconsistent.

In this embodiment, the historical query information may be selected from the candidate historical query information that is more relevant to the query information and more interesting to the users based on the predetermined filtering condition, thereby ensuring the accuracy of subsequent questioning dimensions determined based on the historical query information.

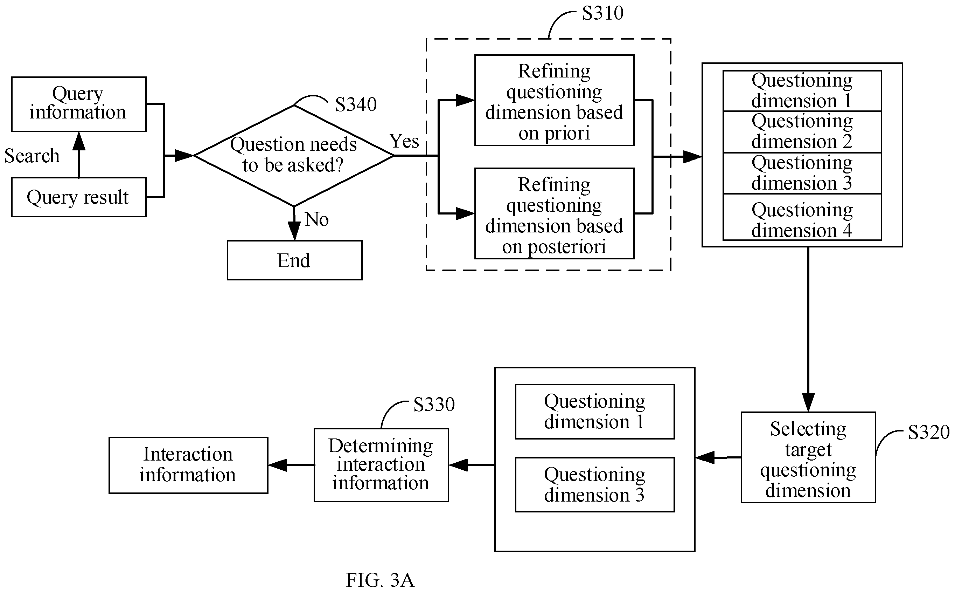

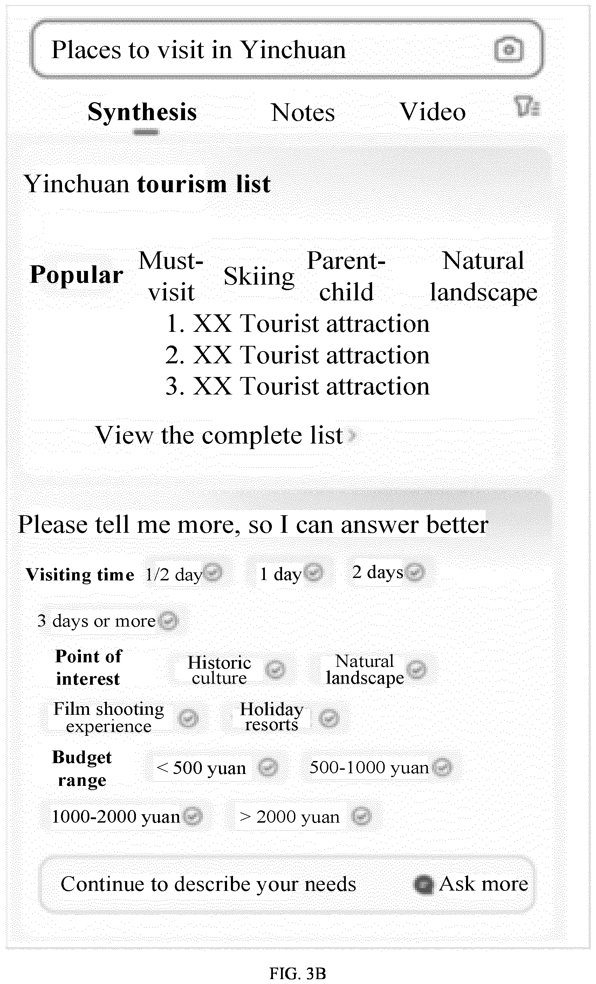

FIG. 3A is a schematic diagram of a principle of a method of determining interaction information according to embodiments of the present disclosure, and FIG. 3B is a schematic diagram of an interaction page according to embodiments of the present disclosure.

According to another embodiment of the present disclosure, the method of determining interaction information may include operation S310 to operation S340, where operation S340 is performed before operation S310.

In operation S340, whether a question needs to be asked is determined.

In operation S310, a plurality of questioning dimensions are determined.

In operation S320, a target questioning dimension is selected.

In operation S330, interaction information is determined.

In the above operation S340, determining whether a question needs to be asked is a pre-processing process, which is mainly used to determine whether there are complex requirements, which need to supplement the query information through questioning. It is possible to determine whether a question needs to be asked through a pre-processing prompt information template. For example, the query information input by the users may be combined with the pre-processing prompt information template, and then may be input into a large model, by which a determination result is output. The pre-processing prompt information template may be pre-configured and stored in a predetermined storage region, and may be read from the storage region when needed.

For example, the pre-processing prompt information template may include a thought chain. The thought chain includes a plurality of steps. The thought chain indicates that the large model infers according to the steps in the thought chain. For example, the plurality of steps contained in the thought chain include: a core of an analysis, which is to determine whether the query result needs to consider distinction of different situations or personalized analysis of users, such as personalized preferences, user profiles, etc. If so, it is determined that the current query belongs to a complex requirement and questioning is needed, otherwise it is determined that no questioning is needed.

For another example, the pre-processing prompt information template may include an example. The example is mainly to explain which are personalized situations and which is the distinction of different situations. For example, the example of the pre-processing prompt information template is as follows. Taking the query information being "recommendation of an attractive novel" as an example, it is required to consider personalized factors such as the user's reading habits, favorite literary types when answering the question. Taking the query information being "prices of houses in Beijing" as an example, due to large differences in the prices of different regions and different types of real estate, the answers need to involve specific situation factors such as regions and real estate types. These questions belong to complex requirements and have room for questioning. On the contrary, taking the query information being "how many hours is equivalent to the Chinese traditional time unit" as an example, this kind of requirement is clear and will not change because of the situation or the specific situation of the individual. Therefore, this query information does not belong to a complex requirement and no questioning is needed.

In this embodiment, the accuracy of questioning is ensured through the determination of questioning requirements, so that more accurate personalized answers may be provided by acquiring more user information through questioning in appropriate cases.

In the above operation S310, in a process of determining the plurality of questioning dimensions, the plurality of questioning dimensions may be determined according to the query information of the subject and the historical query information. Moreover, in the determination process, two perspectives may be considered, including prior refinement dimension analysis and posterior refinement dimension exploring. For example, a prompt information template may be used to prompt the large model, disassembling situation and personalized factors that affect a response to the query information from a priori perspective and a posteriori perspective, and summarizing a dimension set of questioning. Combined with requirement dimensions, refined options are generated to form an interactive user clickable interface.

For example, for the query information "English course recommendation", the prior analysis is first performed. Since different learners have different personalized requirements for contents, forms, etc. of the course, the refinement dimensions are summarized as follows: course contents, teaching methods. In the posterior analysis, according to the historical query information of "Beijing online English teaching" and "English courses suitable for primary school students" formed by this question, supplementary information is analyzed, which includes: Beijing, online and primary school students. The questioning dimensions are summarized, which include: learning population, teaching methods, and region. In this way, the questioning dimensions are built, which include: {"dimension name": "course content", "options": ["daily", "business", "exam"]}, {"dimension name": "teaching method", "options": ["online", "offline"]}, {"dimension name": "learning population", "options": ["primary school students", "middle school students", "adults"]}, {"dimension name": "region", "options": ["Beijing", "Shanghai", "Guangzhou"]}.

In this embodiment, on the one hand, direct analysis may be performed on original requirements using the prior knowledge of the large model, which may insight and inspire users' comprehensive requirements direction. On the other hand, posterior analysis may be performed combined with users' historical search behavior, users' real and specific requirements may be extracted, the confidence of questioning content and the applicability of questioning may be enhanced. In this way, it is possible to generate detailed option contents for each questioning dimension as desired. In the search interface, a user interactive selection region may be formed, achieving an effect of guiding users to clarify complex requirements.

In the above operation S320, in the process of selecting the target questioning dimension, the target questioning dimension may be determined from the plurality of questioning dimensions according to evaluation values of the plurality of questioning dimensions and whether semantic information of the plurality of questioning dimensions are consistent with semantic information of the query result associated with the query information.

In the above operation S330, in the process of determining the interaction information, the interaction information may be determined according to the dimension name and the plurality of options in the target questioning dimension.

According to another embodiment of the present disclosure, the process of determining the plurality of questioning dimensions may include: combining a first prompt information template, the query information, the historical query information and the query result associated with the query information into first prompt information, and then inputting the first prompt information into a large model to obtain the plurality of questioning dimensions. The first prompt information template may be pre-configured and stored in a predetermined storage region, and may be read from the storage region when needed.

In an example, the first prompt information template includes a first thought chain. The first though chain includes a plurality of steps. The first thought chain indicates that the large model infers according to the steps in the first thought chain. For example, the plurality of steps contained in the first thought chain include: determining a type of relationship between the query information and the historical query information, determining whether a questioning dimension exists based on the type of relationship, and generating a questioning dimension and options based on a predetermined refinement direction in a case of candidate questioning dimension. In other examples, the first prompt information template may also indicate an identity and task of the large model. The first prompt information template may also indicate formats of input information and output information of the large model. The first prompt information template may also include an example. In this embodiment, the first prompt information template includes a first thought chain. The large model is guided through the steps in the first thought chain, so that the large model may accurately output the questioning dimension.

For example, in this embodiment, the query information is "movies suitable for two people to watch", and the historical query information includes a plurality of information: movies suitable for two people to watch before exercise, movies for one person to watch, recommendation for US movies suitable for two people to watch, and movies suitable for couples to watch. Based on the above query information and historical query information, the questioning dimensions may be determined as follows: {'dimension name': 'movie type', 'options': ['comedy', 'action', 'love', 'science fiction'}, {'dimension name': 'movie origin', 'options': ['United States', 'China', 'India', 'other countries' }, {'dimension name': 'specific focus factors', 'options': 'plot richness', 'visual effects', 'reputation and evaluation'}.

For example, in this embodiment, the query information is "the top ten mobile games". The historical query information includes the plurality of information: mobile game rankings, top ten Kung Fu mobile games, top ten mobile games, top 10 mobile games. Based on the above query information and historical query information, the questioning dimensions may be determined as follows: {'dimension name': 'game type', 'options': ['Kung Fu', 'shooting', 'strategy', 'adventure']}, {'dimension name': 'ranking basis', 'options': ['download quantity', 'number of active users', 'user use evaluation'] }.

For example, in this embodiment, the first prompt information template is as follows.

You are a search query analysis expert, and you need to ask questions about 「current query」 according to the 「current query」 and 「historical query information」, refine user intentions, and guide the user to perform a plurality of rounds of interaction searches. The 「refine」 is defined as: to obtain a specific meaning.

The specific steps for disassembling thinking are as follows.

In step 1, problem requirements are analyzed by: analyzing what kind of information users want to acquire or what kind of problem they want to solve through this question, and determining whether the requirements for this question are clear.

In step 2, historical query information is analyzed by: analyzing 「historical query information」 and determining a relationship between the 「historical query information」 with the 「current query」. The relationship is mainly divided into four categories. A first category is that the 「historical query information」 is semantically the same as the 「current query」 and does not have any information gain. A second category is that the 「historical query information」 is completely unrelated to the 「current query」. A third category is that a subject or requirement content has changed. A fourth category is that it is further refined on the basis of the 「current query」. According to the above analysis, whether the user's historical query information may provide effective and refinable dimensions is determined. If so, output True; otherwise output False.

In step 3, whether the problem needs to be refined is determined by: if it is not False in step 2, the content of 「historical query information」 may be referred to in the analysis process. During specific determination, it is considered whether the current problem needs to be refined from three directions of 「supplementing specific situations for refinement」, 「refining combined with user personal situations」, and 「refining for requirement levels」, respectively. If it is not needed to further refine in the three directions, it means that the problem is already specific enough and no more refinement is further required. Otherwise, it may be determined that the current problem needs to be further refined.

Based on the problem requirements and 「historical query information content」, it is determined whether the current problem needs to be refined.

In step 4, refinement dimensions are listed by: listing the refinement dimensions that have a key impact on answering the current question from the three directions of 「supplementing specific situations for refinement」, 「refining combined with user personal situations」, and 「refining for requirement levels」. The refinement dimension of the 「refining for requirement levels」 direction may have no optional content and only provide the refinement dimension. The refinement dimensions of the other two directions need to provide optional contents.

In step 5, the refinement dimensions are de-duplicated compared with refinement dimensions that the current query result already have by: analyzing whether the current query result contains the refinement dimensions disassembled above. If it contains, semantically redundant dimensions are deleted in the following analysis.

##Input format: query {}, Answer {}, historical query information {}.

##Output format:

{

"question requirement analysis": "analyze the user's 「current query」".

"historical query information analysis": "analyze historical query information behavior".

"determining whether the problem needs to be refined": "determine whether to trigger refinement from three directions".

"list refinement dimensions": "list refinement dimensions and corresponding options from three directions".

"de-duplicating according to refinement dimensions that the current query results have": "".

}

##Example: AAA.

##Based on the requirements and [example], determine your thought process and results.

The first prompt information template has been explained above, and it may be understood that "query" in the first prompt information template represents query information and "answer" in the first prompt information template represents query results.

According to another embodiment of the present disclosure, the process of selecting the target questioning dimension may include a deduplication sub-process and a value evaluation sub-process.

For the deduplication sub-process, for each questioning dimension among the plurality of questioning dimensions, in a case of determining that the semantic information of the questioning dimension is consistent with the semantic information of the query result associated with the query information, a questioning dimension may be deleted from the plurality of questioning dimensions to obtain de-duplicated questioning dimensions.

For the evaluation sub-process, the target questioning dimension may be determined from the de-duplicated questioning dimensions according to respective evaluation values of the de-duplicated questioning dimensions.

It should be noted that if a feedback of some contents has been provided in the query results, there is no need to repeatedly ask related questions to the user at this time. Therefore, the deduplication sub-process may be used to avoid repeated queries and improve the accuracy of the questioning dimension. By evaluating the questioning dimensions, the accuracy of the target questioning dimension may better meet the user query requirements.

According to another embodiment of the present disclosure, the deduplication sub-process in the process of selecting the target questioning dimension may include: combining a second prompt information template, the query information, the query result and the plurality of questioning dimensions into second prompt information, and then inputting the second prompt information into a large model to obtain the de-duplicated questioning dimensions.

The form of the second prompt information template is similar to that of the first prompt information template. For example, the second prompt information template may be pre-configured and stored in a predetermined storage region, and may be read from the storage region when needed. For example, the second prompt information template includes a second thought chain. The second thought chain includes a plurality of steps. The second thought chain indicates that the large model infers according to the steps in the second thought chain. For example, the plurality of steps contained in the second thought chain include: generating summary information for query result information and determining whether the summary information is related to the questioning dimension. In other examples, the second prompt information template may also indicate an identity and task of the large model. The second prompt information template may also indicate formats of input information and output information of the large model. The second prompt information template may also include an example. In this embodiment, the second prompt information template includes a second thought chain. The large model is guided through the steps in the second thought chain, so that the large model may accurately perform deduplication processing, thereby avoiding repeated questions about existing contents in the query results.

For example, in this embodiment, the second prompt information template is as follows.

You are a robot used to evaluate whether questioning dimensions are consistent with semantics of a query result answer. Your responsibility is to generate a thinking logical chain of

$$\lceil \text{whether the current questioning dimension is repeated relative}$$

$$\text{to the semantic meaning of the query result} \rfloor \quad \text{through the input <query>, <answer> and <questioning dimension>.}$$

The specific thinking steps and logic are as follows.

In step 1, the current <query>, <answer>, and <questioning dimension> are deeply understood, the value and impact of <questioning dimension> on understanding the current<query> are deeply thought and reflected on, and the main contents that have been replied in the current query results are summarized and abstracted.

In step 2, starting from a given list of questioning dimensions, it is determined whether the content of each questioning dimension has been mentioned in above-mentioned step 2. If it is mentioned, it is determined that the semantic of the questioning dimension is repeated relative to the semantic of the current query results, otherwise there is no repetition.

In step 3, corresponding JSON data is output.

I will provide you an example below. You need to learn how to generate a required thought chain by this example.

Example: BBB.

Below, I will give you an input. According to the content you have learned above, you need to think deeply and reflect on the content, and finally generate a corresponding de-duplication thought chain.

The second prompt information template has been explained above.

According to another embodiment of the present disclosure, the evaluation value sub-process in the process of determining the target questioning dimension may include: combining a third prompt information template, the query information, the query result, and the de-duplicated questioning dimensions into third prompt information, and then inputting the third prompt information into a large model to obtain a target questioning dimension.

The form of the third prompt information template is similar to those of the first prompt information template and the second prompt information template. For example, the third prompt information template may be pre-configured and stored in a predetermined storage region, and may be read from the storage region when needed. For example, the third prompt information template includes a third thought chain. The third thought chain includes a plurality of steps. The third thought chain indicates that the large model infers according to the steps in the third thought chain. For example, the plurality of steps contained in the third thought chain include: determining the evaluation values of the questioning dimensions based on a predetermined evaluation method, and selecting the target questioning dimension from the de-duplicated questioning dimensions based on the evaluation values. The predetermined evaluation method may include evaluating a key degree that affects the current answer from the questioning dimension, and may also include evaluating whether the questioning dimension helps to further understand users' requirements. In other examples, the third prompt information template may also indicate an identity and task of the large model. The third prompt information template may also indicate formats of input information and output information of the large model. The third prompt information template may also include an example. In this embodiment, the third prompt information template includes a third thought chain. The large model is guided through the steps in the third thought chain, so that the large model may accurately select more valuable questioning dimensions, thereby improving user satisfaction and ensuring the value and applicability of questioning dimensions.

For example, in this embodiment, the third prompt information template is as follows.

You are a robot used to evaluate degrees of prior values of questioning dimensions. Your responsibility is to generate a thinking logical chain of $\lceil$ analyzing a prior value of the questioning dimension $\rfloor$ through the input <query>, <answer> and <questioning dimensions

The specific thinking steps and logic are as follows.

In step 1, the current <query>, <answer> and <questioning dimension> are deeply understood, and the value and impact of <questioning dimension> on understanding the current <query> are deeply thought and reflected on.

In step 2, a degree of the value of the questioning dimension newly proposed is evaluated, where specific evaluation criteria are whether the current refinement direction is a key factor affecting the answer to the question, and whether it is effective for deeply understanding of the current question requirements.

In step 3, finally, three most valuable target questioning dimensions are selected finally. In each target questioning dimension, up to four optional contents are provided, and whether the optional contents are mutually exclusive is determined.

Example: CCC.

The third prompt information template has been explained above.

According to another embodiment of the present disclosure, after obtaining the plurality of target questioning dimensions, the plurality of target questioning dimensions may be sorted, or may be sorted according to a frequency of clicks on the target questioning dimensions. For example, the user group to which the user inputting the query information belongs may be determined, and then the frequency of clicking on the target questioning dimension in the historical search process of this user group may be determined. Then the target questioning dimensions are sorted based on frequency. It should be noted that sometimes the plurality of users in the same user group have similar intentions. In this embodiment, the ranking of target questioning dimensions is determined through the historical operations of the user group, so that it is possible to prioritize the display of more valuable target questioning dimensions.

According to another embodiment of the present disclosure, the process of determining interaction information may include: combining a fourth prompt information template, the query information, and the target questioning dimension into fourth prompt information, and then inputting the fourth prompt information into a large model to obtain a question for asking in the interaction information.

The form of the fourth prompt information template is similar to that of the first prompt information template, the second prompt information template, and the fourth prompt information template. For example, the fourth prompt information template may be pre-configured and stored in a predetermined storage region, and may be read from the storage region when needed. For example, the fourth prompt information template includes a fourth thought chain. The fourth thought chain includes a plurality of steps. The fourth thought chain indicates that the large model infers according to the steps in the fourth thought chain. For example, the plurality of steps contained in the fourth thought chain includes: determining a query scene based on the query information and the questioning dimension, and generating the question for asking in the interaction information according to the query scene. In other examples, the fourth prompt information template may also indicate an identity and task of the large model. The fourth prompt information template may also indicate the formats of input information and output information for the large model. The fourth prompt information template may also include an example. In this embodiment, the fourth prompt information template includes a fourth thought chain. The large model is guided through the steps in the fourth thought chain, so that the large model may accurately output the question for asking.

For example, in this embodiment, the fourth prompt information template is as follows.

Your task is to reconstruct this question based on an original search question, an information perspective of a question for asking, and options of the question for asking. Specifically, you need to follow steps as follows.

In step 1, information perspectives of the current search question and the question for asking is deeply understood, key factors of the questions and user requirements are analyzed, and a possible background or scene when the user asks the questions is deducted.

In step 2, a concise and smooth question for asking is formed with reference to the provided information perspective of the question for asking and options according to the user's questioning background.

Example:

Input: "search question": "AA"; "dimension name": "BB"; "options": "CC".

Output:

"Step 1": "The user asks DD, and the key factor of this question is EE. The user's requirement is FF. It is speculated that the background or scene that the user may face is GG, so HH needs to be determined".

"Step 2": "The information perspective of the question for asking is II. According to the current questioning background, we may ask questions about the keyword JJ and guide the user to supplement KK".

The final question for asking is "LL".

The fourth prompt information template has been explained above.

It should be noted that some embodiments of the present disclosure combine with large language models and prompt engineering, and guide the output results of the large model using prompt information templates. The large model may be a large language model (LLM), a generative model, etc. The present disclosure does not limit the large models. The prompt information templates (such as a pre-processing prompt information template, a first prompt information template, a second prompt information template, a third prompt information template, a fourth prompt information template, and a fifth prompt information template, etc.) may all be textual information described in natural language. Each prompt information template may be pre-configured and stored in a predetermined storage region, and may be read from the storage region when needed.

According to another embodiment of the present disclosure, there are various ways to apply interaction information after obtaining the interaction information. In an application scene, interaction information may be displayed through the front-end page, so that users may perform a selection operation based on the questioning dimension, thereby supplementing the query content.

For example, after the user selects some options, a new query information may be determined based on an option clicked by the user, and then the query may be performed based on the new query information, so as to update the display of query results to the user. For example, the query information is "traditional Chinese medicine for body conditioning", the questioning dimension name is "gender", and the user option is "female", then the new query information may be "traditional Chinese medicine for female body conditioning".

In addition, after the user selects an option, the selected option may also be converted into natural language. For example, the questioning dimension name is "gender" and the user option is "female", the converted text information may be "my gender is female", and this converted text information may be input in an input box on the page.

According to another embodiment of the present disclosure, there are various ways to apply interaction information after obtaining the interaction information. In another application scene, interaction information may be used to build training samples, and the training samples may then be used to train other models. In this way, the interaction with users may be performed using other trained models in resource limited cases.

For example, taking other models including two SFT models as an example, for the convenience of distinction, one SFT model will be referred to as a first model and the other SFT model will be referred to as a second model.

For the first model, the first model may be a generative model. In the training process, the interaction information may be precisely labeled, and then the precisely labeled data may be used as training samples to train the first model. After training, the input of the first model may include query information, historical query information, a query result associated with the query information, and may also include a prompt information template applicable to the first model. The output of the first model may include a questioning dimension, questioning options and a question for asking after natural language transformation of the questioning dimension.

For example, an output example of the first model is as follows: {"questioning dimension": "name meaning", "question for asking": "for a child's name, the meaning you expect is", "options": ["intelligence", "health and safety", "noble morality"], "whether the options are mutually exclusive": "yes"}, {"questioning dimension": "name origin", "question for asking": "You hope the name to come from", "options": ["Tang Poetry", "Song Ci", "Book of Songs", "Chu Ci"], "whether the options are mutually exclusive": "No"}.

For the second model, the second model may be a generative model. The second model is used to generate coherent natural language text according to the above questioning dimension, the question options and the question for asking, so as to fill in the input box on the front page. For example, the output of the second model is: My baby is a boy, and I hope that the meaning is brave, strong, kind and friendly.

For example, the second model may be guided to generate natural language questions for asking through the pre-configured prompt information template. For example, the prompt information template may be:

Assuming you are an artificial intelligence assistant, your main function is to analyze problems and supplement dimensions and provide feedback to users in a more natural and linguistic way, so as to guide continuous communication between users and you.

The entire analysis process is as follows.

Thinking process: the first step is to combine the question, and perform a natural language guided description modification for each dimension based on the perspective of the questioner in interaction guidance. The second step is to randomly select an option for each dimension, and provide a natural language based requirement supplementary statement, combined with the question and based on the perspective of the respondent in the interaction guidance.

Dimension guided transformation: according to the first step in the thinking process, a modified result of each dimension is provided through natural language guided description modification.

Requirement supplemental statement: according to the second step of the thinking process, the requirement supplemental statement guidance is provided.

The example is as follows:

Question: a difference between a blanket and a mattress.

Supplementary dimensions: [{"dimension name": "comparison aspect", "options under dimension": ["thickness", "material", "cleaning"]}].

The entire analysis process:

"Thinking process": in the supplementary dimension, there is one dimension called "comparative aspect". Combined with the question, a natural language description may be made, which may be changed to "what is the comparative aspect to which you pay more attention regarding the difference between the blanket and the mattress. Assuming the user selects "thickness" under the "comparison aspect" dimension, the user's own requirement supplementary statement may be further organized, which is specifically "I want to know the difference between the blanket and the mattress when the comparative aspect is thickness".

"Dimension guided transformation": ["regarding the difference between the blanket and the mattress, the comparative aspect to which you pay more attention is"].

"Requirement supplemental statement": {"prefix": "I want to know about the blanket and the mattress when", "dimension option combination": ["the comparison aspect is thickness"], "suffix": "for the difference"}.

The precautions are as follows: the output format may be parsed using a predetermined function.

Please analyze the following questions and supplementary dimensions based on the entire analysis process and examples mentioned above:

Question: MMM.

Supplementary dimension: NNN.

The prompt information template guiding the second model is described above.

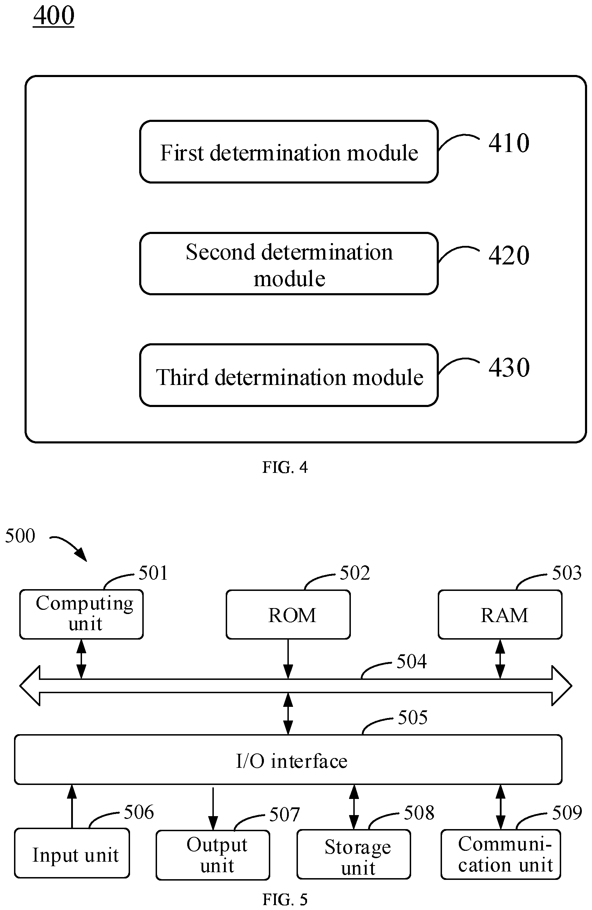

FIG. 4 is a schematic block diagram of a structure of an apparatus of determining interaction information according to embodiments of the present disclosure.

As shown in FIG. 4, an apparatus 400 of determining interaction information may include a first determination module 410, a second determination module 420 and a third determination module 430.

The first determination module 410 is used to determine a plurality of questioning dimensions according to query information of a subject and historical query information. Each questioning dimension includes a dimension name and a plurality of options.

The second determination module 420 is used to determine a target questioning dimension from the plurality of questioning dimensions according to evaluation values of the plurality of questioning dimensions and whether semantic information of the plurality of questioning dimensions are consistent with semantic information of a query result associated with the query information.

The third determination module 430 is used to determine the interaction information according to the dimension name and the plurality of options in the target questioning dimension.

In another embodiment of the present disclosure, the apparatus further includes a historical information determination module used to determine candidate historical query information which meets conditions as the historical query information, where the conditions include: an intention of the candidate historical query information being consistent with an intention of the query information, a search frequency of the candidate historical query information meeting a predetermined frequency condition, and an entity contained in the candidate historical query information being consistent with an entity contained in the query information.

In another embodiment of the present disclosure, the first determination module includes a first combination sub-module and a first input sub-module. The first combination sub-module is used to combine a first prompt information template, the query information, the historical query information and the query result associated with the query information into first prompt information. The first input sub-module is used to input the first prompt information into a large model to obtain the plurality of questioning dimensions. The first prompt information template includes a first thought chain. The first thought chain indicates that the large model obtains the plurality of questioning dimensions by: determining a relationship type between the query information and the historical query information, determining whether a questioning dimension exists based on the relationship type, and generating a question and options based on a predetermined refinement direction in a case of a candidate questioning dimension.

In another embodiment of the present disclosure, the second determination module includes a deletion sub-module and a determination sub-module. The deletion sub-module is used to remove, for each questioning dimension among the plurality of questioning dimensions, the questioning dimension from the plurality of questioning dimensions to obtain de-duplicated questioning dimension, in a case of determining that the semantic information of the questioning dimension is consistent with the semantic information of the query result associated with the query information. The determination sub-module is used to determine the target questioning dimension from the de-duplicated questioning dimensions according to respective evaluation values of the de-duplicated questioning dimensions.

In another embodiment of the present disclosure, the deletion sub-module includes a first combination unit and a first input unit. The first combination unit is used to combine a second prompt information template, the query information, the query result, and the plurality of questioning dimensions into second prompt information. The first input unit is used to input the second prompt information into a large model to obtain the de-duplicated questioning dimensions. The second prompt information template includes a second thought chain. The second thought chain indicates that the large model obtains the de-duplicated questioning dimensions by: generating summary information for the query result and determining whether the summary information is associated with the questioning dimension.

In another embodiment of the present disclosure, the determination sub-module includes a second combination unit and a second input unit. The second combination unit is used to combine a third prompt information template, the query information, the query result, and the de-duplicated questioning dimensions into third prompt information. The second input unit is used to input the third prompt information into a large model to obtain the target questioning dimension. The third prompt information template includes a third thought chain. The third thought chain indicates that the large model obtains the target questioning dimension by: determining the evaluation values of the questioning dimensions based on a predetermined evaluation method, and selecting the target questioning dimension from the de-duplicated questioning dimensions based on the evaluation values.

In another embodiment of the present disclosure, the third determination module includes a second combination sub-module and a second input sub-module. The second combination sub-module is used to combine a fourth prompt information template, the query information and the target questioning dimension into fourth prompt information. The second input sub-module is used to input the fourth prompt information into a large model to obtain a question in the interaction information. The fourth prompt information template includes a fourth thought chain. The fourth thought chain indicates that the large model obtains the question in the interaction information by: determining a query scene based on the query information and the questioning dimension, and generating the question in the interaction information according to the query scene.

According to embodiments of the present disclosure, an electronic device is provided, including at least one processor; and a memory communicatively connected to the at least one processor, where the memory stores instructions executable by the at least one processor, and the instructions, when executed by the at least one processor, are used to cause the at least one processor to implement the method of determining interaction information as described above.

According to embodiments of the present disclosure, a non-transitory computer-readable storage medium storing computer instructions therein is provided, and the computer instructions are used to cause a computer to implement the method of determining interaction information as described above.

According to embodiments of the present disclosure, a computer program product is provided, including a computer program, where the computer program, when executed by a processor, is used to implement the method of determining interaction information as described above.

FIG. 5 is a block diagram of a structure of an electronic device for implementing a method of determining interaction information according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 5, an electronic device 500 may include a computing unit 501, which may perform various appropriate actions and processing based on a computer program stored in a read-only memory (ROM) 502 or a computer program loaded from a storage unit 508 into a random access memory (RAM) 503. Various programs and data required for the operation of the electronic device 500 may be stored in the RAM 503. The computing unit 501, the ROM 502 and the RAM 503 are connected to each other through a bus 504. An input/output (I/O) interface 505 is further connected to the bus 504.

Various components in the electronic device 500 are connected with I/O interface 505, including an input unit 506, such as a keyboard, a mouse, etc.; an output unit 507, such as various types of displays, speakers, etc.; a storage unit 508, such as a magnetic disk, an optical disk, etc.; and a communication unit 509, such as a network card, a modem, a wireless communication transceiver, etc. The communication unit 509 allows the electronic device 500 to exchange information/data with other devices through a computer network such as the Internet and/or various telecommunication networks.

The computing unit 501 may be various general-purpose and/or special-purpose processing components with processing and computing capabilities. Some examples of the computing unit 501 include but are not limited to a central processing unit (CPU), a graphics processing unit (GPU), various specialized artificial intelligence (AI) computing chips, various computing units running machine learning model algorithms, a digital signal processor (DSPs), and any appropriate processor, controller, microcontroller, and so on. The computing unit 501 may perform the various methods and processes described above, such as the method of determining interaction information. For example, in some embodiments, the method of determining interaction information may be implemented as a computer software program that is tangibly contained on a machine-readable medium, such as a storage unit 508. In some embodiments, part or all of a computer program may be loaded and/or installed on the electronic device 500 via the ROM 502 and/or the communication unit 509. When the computer program is loaded into the RAM 503 and executed by the computing unit 501, one or more steps of the method of determining interaction information described above may be performed. Alternatively, in other embodiments, the computing unit 501 may be configured to perform the method of determining interaction information in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described herein may be implemented on a computer including a display device (for example, a CRT (cathode ray tube) or LCD (liquid crystal display) monitor) for displaying information to the user; and a keyboard and a pointing device (for example, a mouse or a trackball), through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1.  A method (200) of determining interaction information, comprising:

    determining (S210, S310) a plurality of questioning dimensions according to query information of a subject and historical query information, wherein each questioning dimension comprises a dimension name and a plurality of options;
    determining (S220, S320) a target questioning dimension from the plurality of questioning dimensions according to evaluation values of the plurality of questioning dimensions and whether semantic information of the plurality of questioning dimensions are consistent with semantic information of a query result associated with the query information; and
    determining (S230, S330) the interaction information according to the dimension name and the plurality of options in the target questioning dimension.

2.  The method (200) of claim 1, further comprising:
    determining candidate historical query information which meets conditions as the historical query information, wherein the conditions comprise:
    an intention of the candidate historical query information being consistent with an intention of the query information, a search frequency of the candidate historical query information meeting a predetermined frequency condition, and an entity contained in the candidate historical query information being consistent with an entity contained in the query information.

3.  The method (200) of claim 1, wherein the determining (S210, S310) a plurality of questioning dimensions according to query information of a subject and historical query information comprises:

    combining a first prompt information template, the query information, the historical query information and the query result associated with the query information into first prompt information; and

inputting the first prompt information into a large model to obtain the plurality of questioning dimensions, wherein the first prompt information template comprises a first thought chain, and the first thought chain indicates that the large model obtains the plurality of questioning dimensions by: determining a relationship type between the query information and the historical query information, determining whether a questioning dimension exists based on the relationship type, and generating a questioning dimension and options based on a predetermined refinement direction in a case of a candidate questioning dimension.

4. The method (200) of any one of claims 1 to 3, wherein the determining (S220, S320) a target questioning dimension from the plurality of questioning dimensions according to evaluation values of the plurality of questioning dimensions and whether semantic information of the plurality of questioning dimensions are consistent with semantic information of a query result associated with the query information comprises:

for each questioning dimension among the plurality of questioning dimensions, in a case of determining that the semantic information of the questioning dimension is consistent with the semantic information of the query result associated with the query information, removing the questioning dimension from the plurality of questioning dimensions to obtain de-duplicated questioning dimensions; and

determining the target questioning dimension from the de-duplicated questioning dimensions according to respective evaluation values of the de-duplicated questioning dimensions.

5. The method (200) of claim 4, wherein in the case of determining that the semantic information of the questioning dimension is consistent with the semantic information of the query result associated with the query information, the removing the questioning dimension from the plurality of questioning dimensions to obtain de-duplicated questioning dimensions comprises:

combining a second prompt information template, the query information, the query result and the plurality of questioning dimensions into second prompt information; and

inputting the second prompt information into a large model to obtain the de-duplicated questioning dimensions, wherein the second prompt information template comprises a second thought chain, and the second thought chain indicates that the large model obtains the de-duplicated questioning dimensions by: generating summary information for the query result and determining whether the summary information is associated with the questioning dimension.

6. The method (200) of claim 4, wherein the determining the target questioning dimension from the de-duplicated questioning dimensions according to respective evaluation values of the de-duplicated questioning dimensions comprises:

combining a third prompt information template, the query information, the query result and the de-duplicated questioning dimensions into third prompt information; and

inputting the third prompt information into a large model to obtain the target questioning dimension; wherein the third prompt information template comprises a third thought chain, and the third thought chain indicates that the large model obtains the target questioning dimension by: determining the evaluation values of the questioning dimensions based on a predetermined evaluation method, and selecting the target questioning dimension from the de-duplicated questioning dimensions based on the evaluation values.

7. The method (200) of claim 1, wherein the determining (S230, S330) the interaction information according to the dimension name and the plurality of options in the target questioning dimension comprises:

combining a fourth prompt information template, the query information and the target questioning dimension into fourth prompt information; and

inputting the fourth prompt information into a large model to obtain a question for asking in the interaction information;

wherein the fourth prompt information template comprises a fourth thought chain, and the fourth thought chain indicates that the large model obtains the question for asking in the interaction information by: determining a query scene based on the query information and the questioning dimension, and generating the question for asking in the interaction information according to the query scene.

8. An apparatus (400) of determining interaction information, comprising:

a first determination module (410) configured to determine a plurality of questioning dimensions according to query information of a subject and historical query information, wherein each questioning dimension comprises a dimension name and a plurality of options;

a second determination module (420) configured to determine a target questioning dimension from the plurality of questioning dimensions according to evaluation values of the plurality of questioning dimensions and whether semantic information of the plurality of questioning dimensions are consistent with semantic information of a query result associated with the query information; and

a third determination module (430) configured to determine the interaction information according to the dimension name and the plurality of options in the target questioning dimension.

9. The apparatus (400) of claim 8, further comprising:

a historical information determination module configured to determine candidate historical query information which meets conditions as the historical query information, wherein the conditions comprise:

an intention of the candidate historical query information being consistent with an intention of the query information, a search frequency of the candidate historical query information meeting a predetermined frequency condition, and an entity contained in the candidate historical query information being consistent with an entity contained in the query information.

10. The apparatus (400) of claim 8, wherein the first determination module (410) comprises:

a first combination sub-module configured to combine a first prompt information template, the query information, the historical query information and the query result associated with the query information into first prompt information; and

a first input sub-module configured to input the first prompt information into a large model to obtain the plurality of questioning dimensions;

wherein the first prompt information template comprises a first thought chain, and the first thought chain indicates that the large model obtains the plurality of questioning dimensions by: determining a relationship type between the query information and the historical query information, determining whether a questioning dimension exists based on the relationship type, and generating a question for asking and options based on a predetermined refinement direction in a case of a candidate questioning dimension.

11. The apparatus (400) of any one of claims 8 to 10, wherein the second determination module (420) comprises:

a deletion sub-module configured to remove, for each questioning dimension among the plurality of questioning dimensions, the questioning dimension from the plurality of questioning dimensions to obtain de-duplicated questioning dimensions, in a case of determining that the semantic information of the questioning dimension is consistent with the semantic information of the query result associated with the query information; and

a determination sub-module configured to determine the target questioning dimension from the de-duplicated questioning dimensions according to respective evaluation values of the de-duplicated questioning dimensions, optionally, the deletion sub-module comprises:

a first combination unit configured to combine a second prompt information template, the query information, the query result and the plurality of questioning dimensions into second prompt information; and

a first input unit configured to input the second prompt information into a large model to obtain the de-duplicated questioning dimensions;

wherein the second prompt information template comprises a second thought chain, and the second thought chain indicates that the large model obtains the de-duplicated questioning dimensions by: generating summary information for the query result and determining whether the summary information is associated with the questioning dimension,

or, the determination sub-module comprises:

a second combination unit configured to combine a third prompt information template, the query information, the query result and the de-duplicated questioning dimensions into third prompt information; and

a second input unit configured to input the third prompt information into a large model to obtain the target questioning dimension;

wherein the third prompt information template comprises a third thought chain, and the third thought chain indicates that the large model obtains the target questioning dimension by: determining the evaluation values of the questioning dimensions based on a predetermined evaluation method, and selecting the target questioning dimension from the de-duplicated questioning dimensions based on the evaluation values.

12. The apparatus (400) of claim 8, wherein the third determination module (430) comprises:

a second combination sub-module configured to combine a fourth prompt information template, the query information and the target questioning dimension into fourth prompt information; and
a second input sub-module configured to input the fourth prompt information into a large model to obtain a question for asking in the interaction information;
wherein the fourth prompt information template comprises a fourth thought chain, and the fourth thought chain indicates that the large model obtains the question for asking in the interaction information by: determining a query scene based on the query information and the questioning dimension, and generating the question for asking in the interaction information according to the query scene.

13. An electronic device (500), comprising:

at least one processor; and
a memory communicatively coupled with the at least one processor,
wherein the memory stores instructions executable by the at least one processor, and the instructions, when executed by the at least one processor, cause the at least one processor to implement the method of any one of claims 1 to 7.

14. A non-transitory computer readable storage medium storing computer instructions, wherein the computer instructions are configured to cause a computer to implement the method of any one of claims 1 to 7.

15. A computer program product, comprising a computer program, wherein the computer program, when executed by a processor, implements the method of any one of claims 1 to 7.

<u>100</u>

FIG. 1

<u>200</u>

| A plurality of questioning dimensions are determined according to query information of a subject and historical query information, where each questioning dimension includes a dimension name and a plurality of options | S210 |

| A target questioning dimension is determined from the plurality of questioning dimensions according to evaluation values of the plurality of questioning dimensions and whether semantic information of the plurality of questioning dimensions are consistent with semantic information of a query result associated with the query information | S220 |

| Interaction information is determined according to the dimension name and the plurality of options in the target questioning dimension | S230 |

FIG. 2

EP 4 546 160 A1

Query
information

Search

Query result

S340

Question needs
to be asked?

No

End

Yes

S310

Refining
questioning
dimension based
on priori

Refining
questioning
dimension based
on posteriori

Questioning
dimension 1

Questioning
dimension 2

Questioning
dimension 3

Questioning
dimension 4

S320

Selecting
target
questioning
dimension

Questioning
dimension 1

Questioning
dimension 3

S330

Determining
interaction
information

Interaction
information

FIG. 3A

Places to visit in Yinchuan

**Synthesis**     Notes     Video

Yinchuan **tourism list**

**Popular**   Must-visit   Skiing   Parent-child   Natural landscape

1. XX Tourist attraction
2. XX Tourist attraction
3. XX Tourist attraction

View the complete list ›

Please tell me more, so I can answer better

**Visiting time**   1/2 day ⊙    1 day ⊙    2 days ⊙

3 days or more ⊙

**Point of interest**    Historic culture ⊙    Natural landscape ⊙

Film shooting experience ⊙    Holiday resorts ⊙

**Budget range**    < 500 yuan ⊙    500-1000 yuan ⊙

1000-2000 yuan ⊙    > 2000 yuan ⊙

Continue to describe your needs    ● Ask more

FIG. 3B

<u>400</u>

First determination module ⌐ 410

Second determination module ⌐ 420

Third determination module ⌐ 430

FIG. 4

500

Computing unit ⌐ 501

ROM ⌐ 502

RAM ⌐ 503

504

505

I/O interface

Input unit ⌐ 506

Output unit ⌐ 507

Storage unit ⌐ 508

Communi-cation unit ⌐ 509

FIG. 5

# EP 4 546 160 A1

**Europäisches Patentamt**
**European Patent Office**
**Office européen des brevets**

# EUROPEAN SEARCH REPORT

**Application Number**

EP 24 21 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/211588 A1 (JIANG DAXIN [CN] ET AL) 19 August 2010 (2010-08-19) * paragraphs [0015], [0022] - [0029], [0055] - [0061] * | 1-15 | INV. G06F16/332 G06F16/3332 G06F16/3329 |

----- 

**TECHNICAL FIELDS SEARCHED (IPC)**

G06F

The present search report has been drawn up for all claims

| Place of search | Date of completion of the search | Examiner |
|---|---|---|
| The Hague | 20 March 2025 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0146

This annex lists the patent family members relating to the patent documents cited in  the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | | Publication date |
|---|---|---|---|---|
| US 2010211588 A1 | 19-08-2010 | US | 2010211588 A1 | 19-08-2010 |
| | | US | 2016210301 A1 | 21-07-2016 |

EPO FORM P0459

For more details about this annex : see Official Journal of the European Patent Office, No. 12/82